# EUROPEAN PATENT SPECIFICATION

(11) **EP 2 665 249 B1**
(45) Date of publication and mention of the grant of the patent: **03.06.2015**
(21) Application number: 12789132.3
(22) Date of filing: 24.04.2012
(51) Int. Cl.: H04N 5/222, B60R 1/00, H04N 5/225

(54) **VEHICLE-MOUNTED CAMERA**
FAHRZEUGMONTIERTE KAMERA
CAMÉRA MONTÉE SUR UN VÉHICULE

(30) Priority: 24.05.2011 JP 2011116128
(43) Date of publication of application: 20.11.2013
(73) Proprietor: Honda Motor Co., Ltd., Minato-ku Tokyo 107-8556 (JP)
(72) Inventor: MATORI, Tadahiro, Wako-shi Saitama 351-0193 (JP)
(74) Representative: Weickmann & Weickmann
(86) International application number: PCT/JP2012/060915
(87) International publication number: WO 2012/160927

(56) References cited:
- WO-A1-99/43242
- GB-A- 2 469 738
- JP-A- 2005 333 201
- JP-A- 2009 265 412
- JP-A- 2012 056 405

## Description

### [Technical Field]

The present invention relates to a vehicle-mounted camera mounted in an interior of a vehicle.

### [Background Art]

There has been proposed various vehicle-mounted cameras which are mounted in an interior of a vehicle for recognizing a traveling environment through a windshield. Such vehicle-mounted cameras are fixed to an inner surface or the like of the windshield.

For example, Patent Document 1 discloses a vehicle-mounted camera having a case fixed to a support plate adhesively fixed to the inner surface of the front windshield, and configured such that a camera body is capable of adjusting an angle in the vertical direction with respect to the case. Since this vehicle-mounted camera is capable of performing fine adjustment of an optical axis angle, in a case there is an attachment error when installing or there occurs a tilt or the like of the vehicle body due to weight distribution change, it is able to ensure a same imaging range by fine adjusting the optical axis angle. Furthermore, Patent Document 2 discloses a structure according to the preamble part of claim 1.

### [Citation List]

### [Patent Document]

Patent Document 1: Japanese Patent Application Laid-Open No. 2003-48491
Patent Document 2: WO 99/43242

### [Summary of Invention]

### [Technical Problem]

However, an inclination angle of the front windshield greatly differs according to the vehicle type, and it is not possible to adjust the optical axis angle so as to obtain an appropriate imaging range by the angle adjustment range degree of the vehicle-mounted camera disclosed in Patent Document 1.

In this regard, it is necessary to prepare various types of vehicle-mounted cameras having different optical axis angles for each vehicle type according to the inclination angle of the front windshield. Since the types of component parts increase as the types of the vehicle-mounted camera increase, there is a problem that it is necessary to prepare a large variety of types of component parts. This problem is not limited to vehicle-mounted cameras fixed to the inner surface of the front windshield, but also applies to vehicle-mounted cameras fixed to an inner surface of a rear windshield.

In view of the above, it is an object of the present invention to provide a vehicle-mounted camera capable of differing the optical axis angle with respect to the windshield while restraining the increase of types of component parts to minimum.

### [Solution to Problem]

The above object is achieved by a camera according to claim 1.

The present invention is a vehicle-mounted camera mounted inside a vehicle interior of the vehicle, comprising a camera body part fixed to an inner surface of a windshield, and a lens part having a built-in lens which forms an image of a subject light entering from forward through the windshield, wherein a first plane surface formed on the camera body part and a second plane surface formed on the lens part contact, and set an angle of the lens part with respect to the camera body part.

According to the present invention, it is able to change the set angle of the lens part with respect to the camera body part by changing either one of the first plane surface formed on the camera body part and the second plane surface formed on the lens part. Therefore, it is able to differ the optical axis angle with respect to the inner surface of the windshield by exchanging the camera body part whose first plane surface is changed or the lens part whose second plane surface is changed.

Furthermore, since it is only required to change the first plane surface formed on the camera body part or the second plane surface formed on the lens part, it is able to differ the optical axis angle with respect to the inner surface of the windshield by changing only the outer shape of the camera body part or the lens part without changing the components housed in the inner part.

In the present invention, it is preferable to comprise a cover part fixed to the camera body part and supports the lens part swingably in a vertical direction.

In such case, since the lens part is supported via the cover part fixed to the camera body part, it is able to simplify the configuration which supports the lens part swingably in the vertical direction with respect to the camera body part.

In the present invention, it is preferable that the lens part is supported swingably at an end part of the cover part.

In this case, it becomes easy to configure such that the camera body part and the lens part do not interfere. Also, by doing so, regardless of the swing of the lens part, that is, regardless of the optical axis angle with respect to the inner surface of the windshield, it is able to provide the cover part in same shape, thereby reducing cost.

Moreover, in such case, for example, it may be configured to provide a swing axis to either one of the end part of the cover part or the lens part, and the other is supported swingably with respect to the swing axis.

Moreover, in the present invention, it is preferable to provide a set angle confirmation mark on an outer surface of the camera body part or the lens part.

In this case, the manufacturer is able to easily confirm the set angle of the lens part with respect to the camera body part by the set angle confirmation mark when exchanging the camera body part or the lens part.

### [Brief Description of Drawings]

Fig. 1 is a perspective view showing a vehicle-mounted camera according to an embodiment of the present invention.
Fig. 2 is a side view showing a camera body part and an assembly composed of a lens part and a cover part.

### [Description of Embodiments]

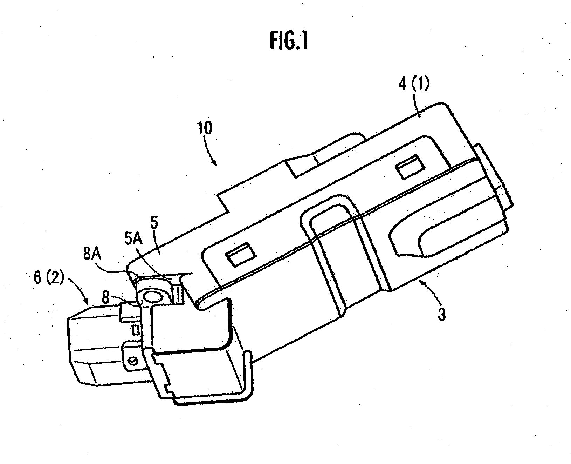

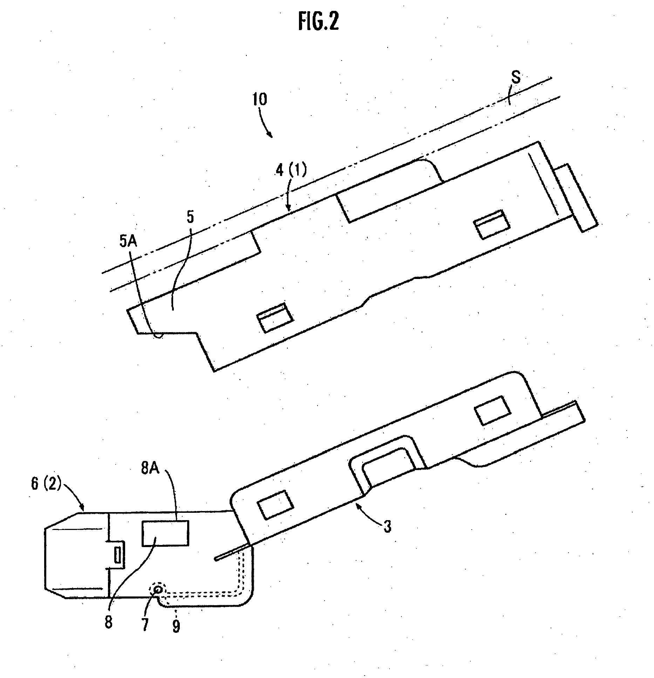

Hereinafter, an embodiment of a vehicle-mounted camera 10 (hereinafter referred to as the camera 10) of the present invention will be explained with reference to FIG. 1 and FIG. 2.

The camera 10 is mounted in a vehicle interior of the vehicle and images a travelling environment. Here, the camera 10 is attached to an inner surface of a front windshield S at a position adjacent to a roof part which does not obstruct the driver, and images the travelling environment ahead of the vehicle.

As the camera 10, one camera may be mounted for a monocular vision (imaging) of the travelling environment ahead of the vehicle, or a plurality of cameras may be mounted for a compound eye vision (stereo imaging) of the travelling environment ahead of the vehicle.

An image captured by the camera 10 is used for detecting an object to be detected outside the vehicle. For example, it is used to detect a white line on a road so that the vehicle travels along the white line (to keep the lane).

The camera 10 includes a camera body part 1 fixed to the inner surface of a front windshield S, a lens part 2 having a built-in lens not illustrated which forms an image of a subject light entering from forward through the front windshield S, and a cover part 3 which covers a lower side of the camera body part 1 and is fixed thereto, and which supports the lens part 2 swingably in the vertical direction.

The camera body part 1 contains inside a body case 4 made of resin as a housing thereof, an imaging circuit (not illustrated) and the like.

The body case 4 is fixed to the inner surface of the front windshield S by a known fixing means. The body case 4 is hung and fixed substantially parallel to the front windshield S, and is configured such that an angle with respect to the front windshield S cannot be adjusted.

The fixing means is not limited, and for example, an upper surface of the body case 4 maybe directly adhered and fixed to the inner surface of the front windshield S by using adhesive material or double-sided tape or the like. Moreover, the body case 4 may be detachably fixed to a hook which is fixed to the inner surface of the front windshield S by using adhesive material or double-sided tape or the like.

An inclined part 5 is provided at two places at the right and left of a front side of the body case 4, and the under surface of this inclination part 5 is a first plane surface 5A inclined in the front-back direction by a predetermined inclination angle.

Although not illustrated, the lens part 2 includes therein lens arranged on an optical axis in the front-back direction and an imaging element such as a CCD (Charge Coupled Device) sensor or a CMOS (Complementary Metal Oxide Semiconductor) sensor to which the subject light is entered through the lens. The lens part 2 has a lens part case 6 made of resin material as a housing thereof, and the lens and the imaging element or the like are accommodated in this lens part case 6 at a predetermined position. Although not illustrated, the lens part case 6 is formed with an opening at a rear side and the imaging element is connected to the imaging circuit of the camera body part 1 via a wiring through this opening.

A pair of pins 7 protruding integrally in the right-left direction are formed at the lens part case 6.

Moreover, the lens part case 6 is provided with a convex part 8 protruding right and left, and a second plane surface 8A inclined in the front-back direction by a predetermined angle is formed on an upper surface of this convex part 8. The second plane surface 8A is inclined by an angle so as to come in contact with the first plane surface 5A as a matching surface, when the lens part 2 is attached with a predetermined set angle with respect to the camera body part 1.

The cover part 3 is formed by press forming from a thin metal plate such as a stainless steel thin plate and fixed to the camera body part 1, and supports the lens part 2 at an end portion thereof swingably in the vertical direction. Here, the cover part 3 has a planar portion covering an under surface of the camera body part 1 and has a portion continuous from a forward end side of this planar portion and which covers a rear surface and an under surface of the lens part 2 in an L-shape viewed from the side.

Here, the cover part 3, at a planar portion thereof which extends upwards from both right and left end sides from the planar portion which covers the under surface of the camera body part 1 and which covers a part of right and left side surfaces of the camera body part 1, is snap fit and fixed to both right and left side surfaces of the camera part 1. However, it may be fixed by a known fixing method such as screw clamp.

At a forward end portion of the cover part 3, a substantially cylindrical shaft support parts 9 which are processed by bending a metal thin plate and forming a hole therein inside, are provided at two places at the right and left. Then, a pair of pins 7 of the lens part case 6 is pivotably supported by these shaft support parts 9. By doing so, the lens part 2 is supported swingably in the vertical direction at the forward end portion of the cover part 3.

Moreover, a pin may be provided at the forward end portion of the cover part 3 and a shaft support part swingable about this pin may be provided at the lens part case 6. Moreover, the lens part 2 may be swingably supported by fitting an end portion of the cover part 3 with the lens part case 6 without providing the shaft support part 9.

Only by attaching an assembly composed of the lens part 2 and the cover part 3 to the camera body part 1, the first plane surface 5A formed integrally with the body case 4 and the second plane surface 8A formed on the lens part case 6 becomes a matching surface and contacts each other. By doing so, the angle of the lens part 2 with respect to the camera body part 1 becomes a predetermined set angle.

By changing either one of the first plane surface 5A formed on the body case 4 and the second plane surface 8A formed on the lens part case 6, it is able to change the set angle of the lens part 2 with respect to the camera body part 1. Therefore, by exchanging the body case 4 in which the first plane surface 5A is changed or the lens part case 6 in which the second plane surface 8A is changed, it is able to differ the optical axis angle of the camera 10 with respect to the inner surface of the front windshield S without changing the component elements housed inside theses cases 4, 6.

The camera body part 1 and the lens part 2 are configured so as not to interfere with each other except at the matching surface, even if the lens part 2 is swung with respect to the camera body part 1 at an angle other than the set angle.

Moreover, it is preferable that a set angle confirmation mark is provided at an outer surface of the body case 4 or the lens part case 6. By doing so, when the camera body part 1 or the lens part 2 is exchanged, the manufacturer can easily confirm the set angle of the lens part 2 with respect to the camera body part 1 by the set angle confirmation mark.

The vehicle-mounted camera of the present invention is not limited to the above described camera 10. For example, although a case where the camera is attached to the inner surface of the front windshield S has been explained, the camera may be the one attached to an inner surface of a rear windshield.

Furthermore, the camera does not necessary have to include a cover part. The camera may be configured by supporting the lens part swingably in the vertical direction directly with respect to the camera body.

### [Explanation of Reference Signs]

1...camera body part, 2...lens part, 3... cover part, 4 ... body case, 5... inclination part, 5A... first plane surface, 6...lens part case, 7...pin (swing axis), 8...convex part, 8A...second plane surface, 9...shaft support part, 10...camera (vehicle-mounted camera), S...front windshield (windshield)

## Claims

1. A camera (10) adapted to be mounted inside a vehicle interior of a vehicle, comprising:
a camera body part (1) adapted to be fixed to an inner surface of a windshield (S); and
a lens part (2) having a built-in lens which is adapted to form an image of a subject light entering from forward through the windshield (S),
wherein a first plane surface (5A) formed on the camera body part (1) and a second plane surface (8A) formed on the lens part (2) contact, and set an angle of the lens part (2) with respect to the camera body part (1);
**characterised in that**
the camera body part (1) includes at least an imaging circuit.

2. The camera (10) according to claim 1, comprising a cover part (3) fixed to the camera body part (1) and supports the lens part (2) swingably in a vertical direction.

3. The camera (10) according to claim 2, wherein the lens part (2) is supported swingably at an end part of the cover part (3).

4. The camera (10) according to claim 3, wherein a swing axis (7) is provided to either one of the end part of the cover part (3) or the lens part (2), and the other is supported swingably with respect to the swing axis (7).

5. The camera (10) according to any one of claims 1 to 4, wherein a set angle confirmation mark is provided on an outer surface of the camera body part (1) or the lens part (2).

6. The camera (10) according to claim 1, wherein at least one of the first plane surface (5A) and the second plane surface (8A) is changed to change the set angle of the lens part (2).

## Patentansprüche

1. Kamera (10), die dazu eingerichtet ist, innerhalb eines Fahrzeuginnenraumes eines Fahrzeugs befestigt zu werden, umfassend:
einen Kamerakörperteil (1), der dazu eingerichtet ist, an einer inneren Oberfläche einer Windschutzscheibe (S) fixiert zu werden; und
einen Linsenteil (2), der eine eingebaute Linse aufweist, die dazu eingerichtet ist, ein Bild von einem Aufnahmelicht zu bilden, das von vorne durch die Windschutzscheibe (S) eintritt,
wobei eine erste ebene Fläche (5A), die auf dem Kamerakörperteil (1) gebildet ist, und eine zweite ebene Fläche (8A), die auf dem Linsenteil (2) gebildet ist, sich berühren und einen Winkel des Linsenteils (2) in Bezug auf den Kamerakörperteil (1) einstellen;
**dadurch gekennzeichnet, dass**
der Kamerakörperteil (1) mindestens einen bildgebenden Schaltkreis umfasst.

2. Kamera (10) nach Anspruch 1, umfassend einen Abdeckungsteil (3), der an dem Kamerakörperteil (1) fixiert ist und den Linsenteil (2) in einer vertikalen Richtung schwenkbar haltert.

3. Kamera (10) nach Anspruch 2, wobei der Linsenteil (2) schwenkbar an einem Endteil des Abdeckungsteils (3) gehaltert ist.

4. Kamera (10) nach Anspruch 3, wobei eine Schwenkachse (7) an entweder dem Endteil des Abdeckungsteils (3) oder dem Linsenteil (2) bereitgestellt ist und der jeweilig andere schwenkbar in Bezug auf die Schwenkachse (7) gehaltert ist.

5. Kamera (10) nach irgendeinem der Ansprüche 1 bis 4, wobei eine Einstellwinkelbestätigungsmarkierung an einer äusseren Fläche des Kamerakörperteils (1) oder des Linsenteils (2) bereitgestellt ist.

6. Kamera (10) nach Anspruch 1, wobei mindestens eine der ersten ebenen Fläche (5A) und der zweiten ebenen Fläche (8A) verändert wird, um den Einstellwinkel des Linsenteils (2) zu verändern.

## Revendications

1. Caméra (10) adaptée pour être montée à l'intérieur d'un intérieur de véhicule d'un véhicule, comprenant :
une partie de corps de caméra (1) adaptée pour être fixée sur une surface interne d'un pare-brise (S); et
une partie de lentille (2) ayant une lentille intégrée qui est adaptée pour former une image d'une lumière de sujet entrant par l'avant à travers le pare-brise (S),
dans laquelle une première surface de plan (5A) formée sur la partie de corps de caméra (1) et une seconde surface de plan (8A) formée sur la partie de lentille (2) sont en contact, et règlent un angle de la partie de lentille (2) par rapport à la partie de corps de caméra (1) ;
**caractérisée en ce que**
la partie de corps de caméra (1) comprend au moins un circuit de prise d'image.

2. Caméra (10) selon la revendication 1, comprenant une partie de couvercle (3) fixée sur la partie de corps de caméra (1) et supporte la partie de lentille (2) de manière oscillante dans une direction verticale.

3. Caméra (10) selon la revendication 2, dans laquelle la partie de lentille (2) est supportée de manière oscillante au niveau d'une partie d'extrémité de la partie de couvercle (3).

4. Caméra (10) selon la revendication 3, dans laquelle un axe d'oscillation (7) est prévu sur l'une de la partie d'extrémité de la partie de couvercle (3) ou la partie de lentille (2) et l'autre est supportée de manière oscillante par rapport à l'axe d'oscillation (7).

5. Caméra (10) selon l'une quelconque des revendications 1 à 4, dans laquelle une marque de confirmation d'angle de consigne est prévue sur une surface externe de la partie de corps de caméra (1) ou de la partie de lentille (2).

6. Caméra (10) selon la revendication 1, dans laquelle au moins l'une parmi la première surface de plan (5A) et la seconde surface de plan (8A) est modifiée afin de modifier l'angle de consigne de la partie de lentille (2).
